Europäisches Patentamt

European Patent Office

Office européen des brevets

(19)

(11) **EP 1 110 287 B1**

(12) **EUROPÄISCHE PATENTSCHRIFT**

(45) Veröffentlichungstag und Bekanntmachung des Hinweises auf die Patenterteilung:
**17.04.2002  Patentblatt 2002/16**

(21) Anmeldenummer: **99953532.1**

(22) Anmeldetag: **18.08.1999**

(51) Int Cl.⁷: **H02H 3/44**, H02H 3/08

(86) Internationale Anmeldenummer:
**PCT/DE99/02594**

(87) Internationale Veröffentlichungsnummer:
**WO 00/13281 (09.03.2000 Gazette 2000/10)**

(54) **SCHUTZEINRICHTUNG FÜR NIEDERSPANNUNGSNETZE**

PROTECTION DEVICE FOR LOW VOLTAGE NETWORKS

DISPOSITIF DE PROTECTION POUR RESEAUX BASSE TENSION

(84) Benannte Vertragsstaaten:
**DE FR GB IT SE**

(30) Priorität: **31.08.1998  DE 19839616**

(43) Veröffentlichungstag der Anmeldung:
**27.06.2001  Patentblatt 2001/26**

(73) Patentinhaber: **SIEMENS AKTIENGESELLSCHAFT**
**80333 München (DE)**

(72) Erfinder:
- **ELISCHER, Werner**
  **D-91080 Spardorf (DE)**
- **GRIEPENTROG, Gerd**
  **D-91058 Erlangen (DE)**
- **MAIER, Reinhard**
  **D-91074 Herzogenaurach (DE)**
- **ZERBIAN, Erich**
  **D-92269 Fensterbach (DE)**

(56) Entgegenhaltungen:
**EP-A- 0 838 887**     **US-A- 5 321 380**

**Beschreibung**

Die Erfindung bezieht sich auf eine Schutzeinrichtung mit einer Auswerteeinrichtung, die Augenblickswerte von Strom und Stromsteilheit zur Erkennung eines Kurzschlusses heranzieht. Eine solche Einrichtung ist Gegenstand der EP 0 838 887 A1.

Schutzeinrichtungen für Niederspannungsnetze sind vom Stand der Technik in unterschiedlichsten Realisierungen bekannt und dienen insbesondere zum Abschalten der Schaltgeräte bei Überströmen. Beispielsweise kann die Meßeinrichtung durch einen konventionellen Stromwandler realisiert werden. Ein solcher Stromwandler verursacht aber üblicherweise durch den notwendigen Eisenkreis und den zugehörigen Wicklungsraum einen entsprechend hohen Raumbedarf. Für die Erkennung von Überlastzuständen werden heutzutage meist elektronisch bzw. mikroprozessorgesteuerte Auswerteschaltungen eingesetzt, die im wesentlichen eine Bimetallfunktion nachbilden. Solche Bimetalle werden auch bei einfachen Geräten in Verbindung mit Auslösespulen verwendet, die allerdings keinen optimalen Schutz bieten.

In der aktuellen Entwicklung erfordert die Schaltgerätekonstruktion zunehmend eine raum- und gewichtssparende Bauweise sowie in das Schaltgerät integrierte Diagnosefunktionen und Kommunikationsmöglichkeiten.

Aufgabe der Erfindung ist es, eine Schutzeinrichtung zu schaffen, die einerseits eine raum- und massensparende Bauweise der Schutzeinrichtung und andererseits eine schnelle Erkennung der anomalen Betriebszustände zuläßt.

Die Aufgabe ist erfindungsgemäß bei einer Schutzeinrichtung der eingangs genannten Art dadurch durch die Gesamtheit der Merkmale des Patentanspruches 1 gelöst. Weiterbildungen sind in den abhängigen Ansprüchen angegeben.

Bei der Erfindung ist eine Einheit zur Kurzschlußfrüherkennung auf der Basis von Strom und Stromsteilheit mit einem leiterplattenbasierten Mehrwicklungswandler, der zu Strom und zu Stromsteilheit proportionale Signale erzeugt, kombiniert. Die Einheit zur Kurzschlußfrüherkennung kann auf der Basis einer bekannten di/dt-i-Auswertung und insbesondere auf der Basis von toleranten Ortskurven realisiert sein. Bei letzteren sogenannten TOK-Verfahren sind in einer Ortskurvendarsstellung von Strom und Stromsteilheit unterschiedliche Leistungsfaktoren berücksichtigende Ortskurven als Auslösekriterien verwendet.

Mit der Erfindung werden vom Stand der Technik im anderen Zusammenhang bereits vorgeschlagene Mittel zu einer praxistauglichen Schutzeinrichtung für Niederspannungsnetze kombiniert. Leiterplattenbasierte Stromwandler als Mehrwicklungswandler sind beispielsweise aus der US 5 321 380 A bekannt, während speziell nach dem Prinzip der sogenannten toleranten Ortskurven arbeitendes Verfahren zur Kurzschiußfrüherkennung (TOK-Verfahren) im älteren, nichtvorveröffentlichten deutschen Patent gemäß der DE 197 29 599 C1 vorgeschlagen wird.

Weitere Einzelheiten und Vorteile der Erfindung ergeben sich aus nachfolgender Figurenbeschreibung von Ausführungsbeispielen anhand der Zeichnung in Verbindung mit weiteren Patentansprüchen. Es zeigen in schematischer Darstellung

Figur 1     ein Ersatzschaltbild eines leiterplattenintegrierten Stromwandlers mit leerlaufender Sekundärwicklung und

Figuren 2 und 3     zwei unterschiedliche Realisierungen von Schutzeinrichtungen mit einem zugehörigen leiterplattenbasierten Wandler.

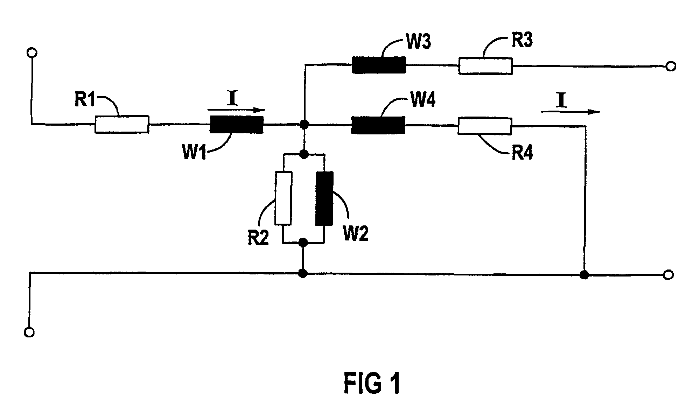

In Figur 1 ist ein Ersatzschaltbild eines Stromwandlers dargestellt. Gekennzeichnet sind im einzelnen die Primärwicklung W1 sowie Sekundärwicklungen W2, W3 und W4. Die zugehörigen ohmschen Widerstände sind mit R1 bis R4 bezeichnet. Der Strom ist hier mit I angegeben.

Aus dem resultierenden Ersatzschaltbild des Stromwandlers gemäß Figur 1 ist zu entnehmen, daß die induzierte Spannung an der Wicklung W3 dem ohmsch-induktiven Spannungsabfall über der resultierenden Impedanz der Wicklungen W2 und W4 entspricht, durch welche bei Vernachlässigung des Magnetisierungsstroms sowie den Eisenverlusten der zu messende Strom fließt. Somit gibt die Wicklung W3 eine Spannung ab, welche sich gemäß

$$u_{W3} = k_R \cdot i(t) + k_X \cdot \frac{di}{dt} \tag{1}$$

ergibt, wobei die Konstanten $k_R$ und $k_X$ nur von der Bauform des leiterplattenintegrierten Stromwandlers abhängig sind. Da die Wicklung W4 kurzgeschlossen ist, ist der Strom aus dieser Wicklung W4 und der Operationsverstärkerschaltung bekannt, so daß aus W3 die Stromsteilheit di/dt durch einfache Berechnung aus der Spannung Uw3 gewonnen werden kann.

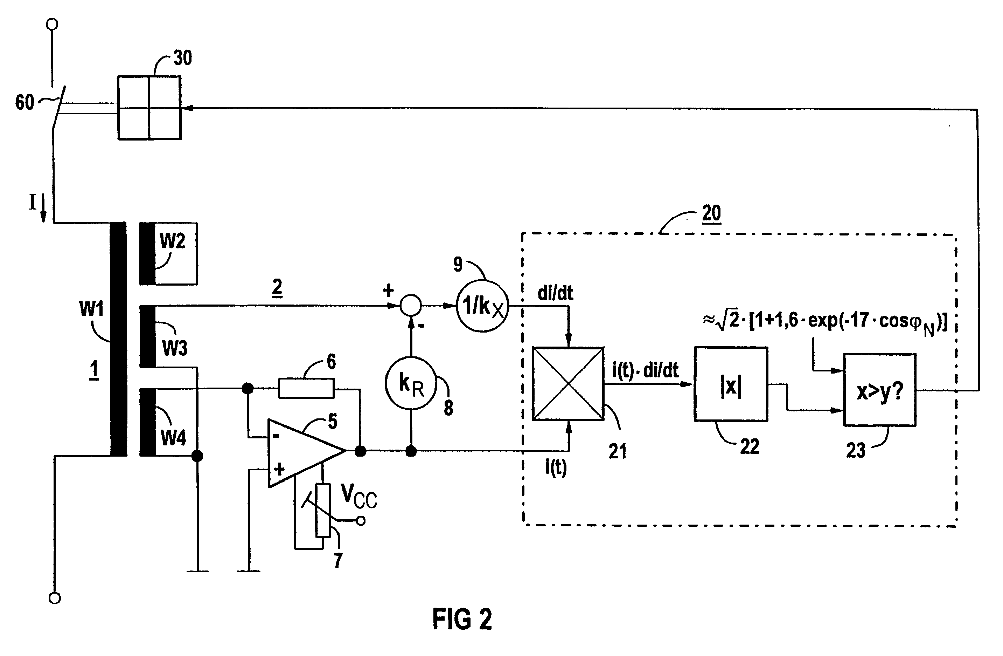

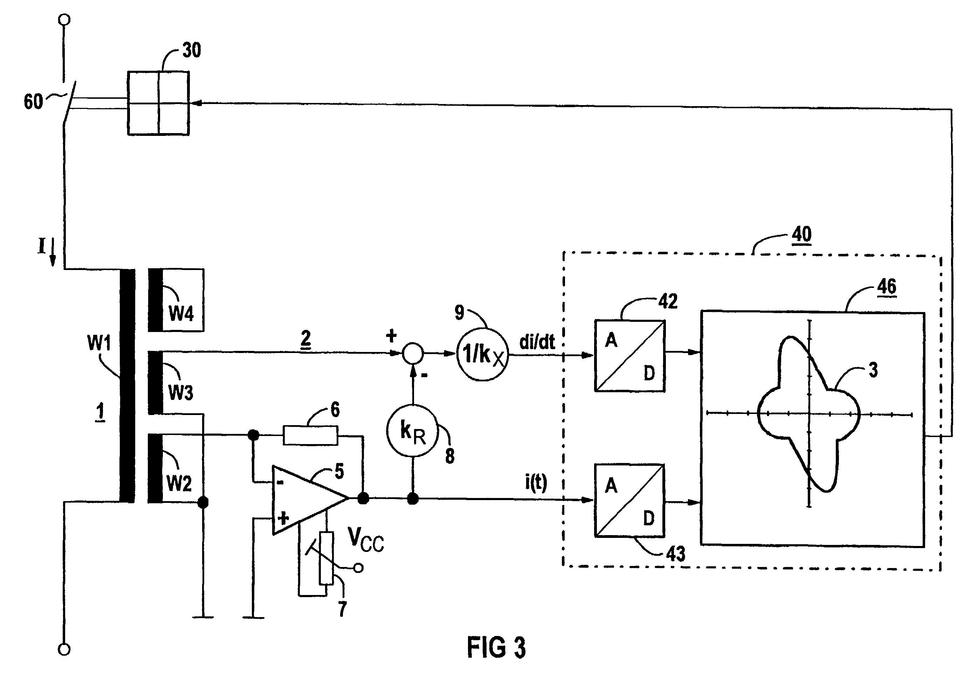

In den Figuren 2 und 3 sind Anordnungen zum Kurzschlußschutz speziell einphasig ausgebildet. Sie können jedoch auch mehrphasig ausgebildet sein.

In Figur 2 bedeuten 1 den leiterplattenintegrierten Wicklungswandler, der in diesem Fall mit der Primärwicklung W1 und den Sekundärwicklungen W2 bis W4 als Vier-Wicklungswandler ausgelegt ist. Auf der Sekundärseite ist eine Verstärkerschaltung 2 mit Operationsverstärker 5 und Beschaltungswiderständen 6 und 7 als Strom-Spannungs-Wandler ausgebildet, dem Einheiten 8 und 9 zur Beaufschlagung mit den Konstanten $k_R$ und $1/k_X$ nachgeschaltet sind.

Die Signale gelangen auf einer Einheit 20 zur Kurzschlußerkennung auf Basis des Produktes von Strom i(t) und Stromsteilheit dt/dt, wobei in Figur 2 eine Schaltung mit analoger Signalverarbeitung gewählt ist. Die Einheit enthält einen Multiplizierer 21 zur Bildung des Produktes i(t)∗dt/dt, eine Einheit 22 zur Betragsbildung Ixl und einen nachfolgenden Komparator zum Vergleich mit einem vorgegebenen Schwellwert y. Überschreitet der ermittelte Wert x den Wert y, wird ein Auslösesignal erzeugt und ein Auslöser 30 zur Öffnung eines Netzschalters 60 aktiviert.

Der Schwellwert y ergibt sich in beispielhafter Form entsprechend der Näherungsgleichung

$$\frac{di}{dt} \cdot i > G_{Produkt} \approx \omega \cdot I_N^2 \cdot \sqrt{2} \cdot [1+1{,}6 \cdot \exp(-17 \cdot \cos\varphi_N)] \Rightarrow \text{Kurzschluß,} \qquad (2)$$

wobei $G_{produkt}$ den Auslöseschwellwert, IN den Effektivwert des Nennstromes, $\omega$ die Kreisfrequenz des Netzes und $\cos\varphi_N$ den Leistungsfaktor des Netzes im Nennbetrieb bedeuten.

In Figur 3 wird ein konkretes, nach dem TOK-Verfahren arbeitendes Ausführungsbeispiel beschrieben. Im einzelnen bedeuten 1 wiederum einen leiterplattenintegrierten Wicklungswandler mit einem Ersatzschaltbild gemäß Figur 1. Die Signale für i(t) und di/dt werden auf eine Einrichtung 40 zur Kurzschlußfrüherkennung nach dem TOK-Verfahren gegeben, die in digitaler Auslegung im wesentlichen aus zwei A/D-Wandlern 41 und 42 sowie der Einheit 46 mit Mikroprozessor-Auswertung besteht.

In der Einheit 46 gemäß Figur 3 ist in einem Diagramm eine Ortskurve für die Abszisse $1/i_N$ und der Ordinate $1/(\omega \ast I_N) \ast di/dt$ aufgetragen. Als Ortskurve ist beispielhaft eine Einhüllende 3 dargestellt, die für einen vorgegebenen Schaltwinkelbereich einerseits und einen Leistungsfaktorbereich von $0{,}1 > \cos\varphi < 0{,}9$ alle Schaltzustände einschließt.

Durch die Einhüllende 3 werden also alle Ortskurven bei beliebigen Schaltwinkeln und bei den daraus für verschiedene Leistungsfaktoren zunächst ermittelten Einhüllenden in einer gemeinsamen Kurve berücksichtigt. Dies bedeutet, daß für den Fall, daß während des Betriebes einer Anlage ein di/dt-Betriebspunkt außerhalb der Einhüllenden 3 liegt, ein Kurzschluß vorliegt. Damit ist in den vorgegebenen Grenzen nunmehr eine Unabhängigkeit von Leistungsfaktor und Vorstrom realisiert, wobei das Entscheidungsmerkmal als sogenanntes TOK-Kriterium (tolerantes Ortskurvenkriterium) bezeichnet wird. Untersuchungen zu diesem Verfahren sind in der älteren deutschen Patentanmeldung 19 29 599.1 im einzelnen ausgeführt.

Die Signale werden in Figur 3 über die AD-Wandler 41 und 42 auf die Einheit zur Auswertung nach dem TOK-Verfahren gegeben. Dabei realisiert 46 in Figur 3 eine Einheit, die digital arbeitet und die digitalisierten Signale für den Strom i und die Stromsteilheit di/dt als Ortskurven auswertet. Sofern im Betriebszustand einer Anlage ein Wert außerhalb der Ortskurve 3 liegt wird von der Einheit 46 der Auslöser 30 aus Figur 2 angesteuert, der wiederum einen Schalter 60 in der stromführenden Leitung öffnet.

Die Einheit 46 in Figur 3 kann auch analog aufgebaut sein, wobei in den Ansteuermitteln entsprechende Abwandlungen vorzusehen sind.

Speziell durch die in Figur 2 und 3 beschriebenen Anordnungen ist aufgrund des leiterplattenbasierten Mehrwicklungs-Stromwandlers eine wesentlich raumsparendere Bauweise erreicht.

Der Raumbedarf gegenüber herkömmlichen Wandlern beträgt bis zu etwa Faktor 50. Auf der nicht konkret dargestellten Leiterplatten können neben den Sekundärwicklungen des Wandlers gleichermaßen die Operationsverstärkerschaltung vorgesehen sein, die nach der Strom-Spannungswandlung eine der zu messenden Stromstärke proportionale Spannung zur weiteren Auswertung abgibt.

Insbesondere durch die Kombination des leiterplattenbasierten Stromwandlers mit dem entsprechenden Auswertealgorithmus der Einheit 46 auf der Basis des TOK-Verfahrens läßt sich eine Früherkennung von Kurzschlüssen erreichen. Im Überlast- bzw. im Kurzschlußfall wird eine Abschaltung des betreffenden Stromkreises frühzeitig vorgenommen. Gleichermaßen kann die Information über den Fehlerfall an eine übergeordnete Kommunikationsebene weitergegeben werden.

## Patentansprüche

**1.** , Schutzeinrichtung für Niederspannungsnetze, mit einer einen Stromwandler enthaltenden Meßeinrichtung zur Bestimmung der Augenblickswerte des Stroms (i) und der Stromsteilheit (di/dt) und mit einer Auswerteeinrichtung, die als Einheit zur Kurzschlußfrüherkennung (20, 40) die Augenblickswerte von Strom (i) und Stromsteilheit (di/dt) zur Erkennung eines Kurzschlusses heranzieht, **dadurch gekennzeichnet, dass** der Stromwandler ein leiterplattenbasierter Mehrwicklungswandler (1, 2; $W_1$ bis $W_4$) mit mindestens zwei Sekundärwicklungen ($W_3$, $W_4$) ist, wobei

von den mindestens zwei Sekundärwicklungen (W3, W4) Signale für den Strom (i) einerseits und die Stromsteilheit (di/dt) andererseits abgeleitet werden.

**2.** Schutzeinrichtung nach Anspruch 1, **dadurch gekennzeichnet, daß** die Einheit zur Kurzschlußfrüherkennung (20) auf der Basis der Ermittlung von vorgegebenen Grenzwerten der Signale von Strom (i) und Stromsteilheit (di/dt) arbeitet.

**3.** Schutzeinrichtung nach Anspruch 2, **dadurch gekennzeichnet, daß** in der Einheit zur Kurzschlußfrüherkennung (20) als Grenzwert das Produkt (i·di/dt) von Strom (i) und Stromsteilheit (di/dt) berücksichtigt wird.

**4.** Schutzeinrichtung nach Anspruch 4, **dadurch gekennzeichnet, daß** für das Produkt (i·di/dt) von Strom (i) und Stromsteilheit (di/dt) die Beziehung gilt:

$$\frac{di}{dt}\cdot i > G_{Produkt} \approx \omega \cdot I_N^2 \cdot \sqrt{2} \cdot [1+1,6\cdot\exp(-17\cdot\cos\varphi_N)] \Rightarrow \text{Kurzschluß,}$$

mit

$G_{Produkt}$: Auslöseschwellwert (bei Überschreitung liegt ein Kurzschluß vor)
$I_N$: Effektivwert des Nennstromes
$\omega$: Kreisfrequenz des Netzes
$\cos\varphi_N$: Leistungsfaktor des Netzes im Nennbetrieb.

**5.** Schutzeinrichtung nach Anspruch 2, **dadurch gekennzeichnet, daß** die Einheit zur Kurzschlußfrüherkennung (40) auf der Basis von toleranten Ortskurven (TOK-Verfahren) arbeitet, wobei in einer Ortskurvendarstellung von Strom (i) und Stromsteilheit (di/dt) unterschiedliche Leistungsfaktoren ($0,1 < \cos\varphi < 0,9$) berücksichtigende Ortskurven als Auslösekriterien verwendet sind.

**6.** Schutzeinrichtung nach Anspruch 5, **dadurch gekennzeichnet, daß** die nach dem TOK-Verfahren arbeitende Einheit zur Kurzschlußfrüherkennung (40, 46) digitale Schaltmittel aufweist.

**7.** Schutzeinrichtung nach Anspruch 5 oder Anspruch 6, **dadurch gekennzeichnet, daß** zwischen dem leiterbasierten Mehrwicklungswandler (1, 2) und der Auswerteeinrichtung (46) Analog/Digital-wandler (42, 43) geschaltet sind.

**8.** Schutzeinrichtung Anspruch 7, **dadurch gekennzeichret,** daß die nach dem TOK-Verfahren arbeitende Einheit (40, 46) zur Kurzschlußfrüherkennung analoge Schaltmittel aufweist.

**Claims**

**1.** Protective device for low-voltage networks with a measuring device containing a current transformer for determining the instantaneous values of current (i) and of current slope (di/dt) and with an evaluating device which as a unit for early recognition of short circuits (20, 40) uses the instantaneous values of current (i) and current slope (di/dt) for recognition of a short circuit, **characterised in that** the current transformer is a circuit-board-based multiple-winding transformer (1, 2; $W_1$ to $W_4$) having at least two secondary windings ($W_3$, $W_4$), with signals for current (i) and current slope (di/dt) being derived from the at least two secondary windings (W3, W4) on the other hand.

**2.** Protective device according to Claim 1, **characterised in that** the unit for early recognition of short circuits (20) functions on the basis of determination of specified limit values of signals of current (i) and current slope (di/dt).

**3.** Protective device according to Claim 2, **characterised in that** in the unit for early recognition of short circuits (20) the product (i·di/dt) of current (i) and current slope (di/dt) is used as the limit value.

**4.** Protective device according to Claim 4, **characterised in that** the product (i·di/dt) of current (i) and current slope (di/dt), the following relationship applies:

$$\frac{di}{dt}\cdot i > G_{Produkt} \approx \omega \cdot I_N^2 \cdot \sqrt{2} \cdot [1+1.6\cdot\exp(-17\cdot\cos\varphi_N)] \Rightarrow \text{short circuit}$$

where

G$_{Produkt}$ means threshold trigger value (if exceeded, there is a short circuit),

I$_N$ means effective value of the nominal current,

ω means circuit frequency of the network, and

cosφ$_N$ means the power factor of the network in nominal operation.

5. Protective device according to Claim 2, **characterised in that** the unit for early recognition of short circuits (40) functions on the basis of tolerant locus curves (TOK method), where in a locus curve depiction of current (i) and current slope (dt/dt), locus curves taking into consideration various power factors (0,1 > cosφ < 0.9) are used as triggering criteria.

6. Protective device according to Claim 5, **characterised in that** the unit for early recognition of short circuits (40, 46) which functions according to the TOK method has digital switching elements.

7. Protective device according to Claim 5 or Claim 6, **characterised in that** between the circuit-board-based multiple-winding transformer (1, 2) and the evaluating device (46), analogue/digital converters (42, 43) are connected.

8. Protective device according to Claim 7, **characterised in that** the unit (40, 46) for early recognition of short circuits which functions by the TOK method has analogue switching elements.


**Revendications**

1. Dispositif de protection pour des réseaux basse tension, comportant un dispositif de mesure qui a un transformateur de courant pour la détermination des valeurs instantanées du courant (i) et de la vitesse de croissance de courant (di / dt) et un dispositif d'évaluation qui, en tant qu'unité pour la détection précoce de court-circuit (20, 40), exploite les valeurs instantanées du courant (i) et de la vitesse de croissance de courant (di / dt), **caractérisé par le fait que** le transformateur de courant est un transformateur à plusieurs enroulements (1, 2 ; W$_1$ à W$_4$) qui est basé sur une carte de circuits imprimés et qui comporte au moins deux enroulements secondaires (W$_3$, W$_4$), des signaux étant déduits à partir des au moins deux enroulements secondaires (W3, W4) pour le courant (i) d'une part et pour la vitesse de croissance de courant (di / dt) d'autre part.

2. Dispositif de protection selon la revendication 1, **caractérisé par le fait que** l'unité pour la détection précoce de court-circuit (20) travaille sur la base de la détermination de valeurs limites prédéterminées des signaux de courant (i) et de la vitesse de croissance de courant (di / dt).

3. Dispositif de protection selon la revendication 2, **caractérisé par le fait que**, dans l'unité pour la détection précoce de court-circuit (20), le produit (i · di / dt) du courant (i) et de la vitesse de croissance de courant (di / dt) est pris en compte comme valeur limite.

4. Dispositif de protection selon la revendication 4, **caractérisé par le fait que**, pour le produit (i · di / dt) du courant (i) et de la vitesse de croissance de courant (di / dt), on a la relation :

$$\frac{di}{dt} \cdot i > G_{Produkt} \approx \omega \cdot I_N^2 \cdot \sqrt{2} \cdot$$

$$[1 + 1{,}6 \cdot \exp(- 17 \cdot \cos\varphi_N)] \Rightarrow \text{court-circuit}$$

avec

G$_{Produkt}$ : valeur de seuil de déclenchement (un court-circuit existe lorsqu'il y a un dépassement),
I$_N$ : valeur effective du courant nominal,
ω : fréquence angulaire du réseau,
cosφ$_N$ : facteur de puissance en fonctionnement nominal.

**5.** Dispositif de protection selon la revendication 2, **caractérisé par le fait que** l'unité pour la détection précoce de court-circuit (40) travaille sur la base de courbes de lieux tolérantes (procédé TOK), des courbes de lieux qui prennent en compte différents facteurs de puissance ($0{,}1 < \cos\varphi < 0{,}9$) étant utilisées comme critères de déclenchement dans une représentation de courbes de lieux du courant (i) et de la vitesse de croissance de courant (di / dt).

**6.** Dispositif de protection selon la revendication 5, **caractérisé par le fait que** l'unité (40, 46) travaillant selon le procédé des courbes de lieux tolérantes ou procédé TOK pour la détection précoce de court-circuit comporte des moyens de commutation numériques.

**7.** Dispositif de protection selon la revendication 5 ou 6, **caractérisé par le fait que** des convertisseurs analogiques-numériques (42, 43) sont branchés entre le transformateur à plusieurs enroulements (1, 2) basé sur une carte de circuits imprimés et le dispositif d'évaluation (46).

**8.** Dispositif de protection selon la revendication 7, **caractérisé par le fait que** l'unité (40, 46) travaillant selon le procédé des courbes de lieux tolérantes ou procédé TOK pour la détection précoce de court-circuit comporte des moyens de commutation analogiques.

FIG 1

FIG 2

EP 1 110 287 B1

FIG 3